# EUROPEAN PATENT APPLICATION

(11) **EP 4 394 808 A1**
(43) Date of publication of application: **03.07.2024**
(21) Application number: 22859786.0
(22) Date of filing: 17.01.2022
(51) Int. Cl.: H01F 1/057, H01F 41/02

(54) **GRAIN BOUNDARY DIFFUSION MATERIAL, NEODYMIUM-IRON-BORON MAGNET, PREPARATION METHOD THEREFOR, AND USE THEREOF**

(30) Priority: 27.08.2021 CN 202111000316
(71) Applicant: Fujian Golden Dragon Rare-earth Co., Ltd., Longyan, Fujian 366300 (CN)
(72) Inventor: LONG, Yanqing, Longyan, Fujian 366300 (CN); LAN, Qiulian, Longyan, Fujian 366300 (CN); LI, Ke, Longyan, Fujian 366300 (CN); HUANG, Jiaying, Xiamen, Fujian 361000 (CN); LI, Sha, Longyan, Fujian 366300 (CN)
(74) Representative: karo IP
(86) International application number: PCT/CN2022/072257
(87) International publication number: WO 2023/024426

(57) **Abstract**

The invention discloses a grain boundary diffusion material, a neodymium-iron-boron magnet, a preparation method and use thereof. The grain boundary diffusion material for a neodymium-iron-boron magnet comprises a diffusion matrix and a diffusion source, wherein the diffusion source is a raw material to be diffused added during grain boundary diffusion treatment; the diffusion matrix comprises the following components of: 29-30 wt% of LR, wherein LR is a light rare earth element; 0.15-0.5 wt% of Cu; 0.99-1.05 wt% of B; 67-70 wt% of Fe, wherein wt% is a mass percentage of respective component in the total mass of the neodymium-iron-boron magnet; the diffusion source comprises Cu and Tb; and a percentage of the mass of Cu in the neodymium-iron-boron magnet to the total mass of the neodymium-iron-boron magnet is more than 0.5 wt%. On the premise of adding the same amount of a heavy rare earth element, the neodymium-iron-boron magnet made from the grain boundary diffusion material for the neodymium-iron-boron magnet in the present invention can have a more significantly improved coercivity while maintaining the remanence basically unchanged.

## Description

### FIELD OF THE INVENTION

The invention relates to a grain boundary diffusion material, a neodymium-iron-boron magnet, a preparation method and use thereof.

### BACKGROUND OF THE INVENTION

Sintered Nd-Fe-B magnets are widely used in fields such as wind power generation, electronic communication, and new energy vehicles due to their excellent magnetic capacity density. However, their low coercivity and poor thermal stability lead to thermal demagnetization during high-temperature operation, which limits their application in the high-temperature field. How to improve the coercivity and thermal stability of magnets has attracted more and more scholars' attention.

A study on the thermal stability and microstructure of a sintered Nd-Fe-B magnet prepared by grain boundary diffusion using a Tb₇₀Cu₃₀ alloy was reported in the Chinese Journal of Rare Earth Materials (Zhou toujun et al, the Key Laboratory of Rare Earth Magnetic Materials and Devices in Jiangxi province, January 21, 2021). A purchased sintered magnet (PrNd)_{29.25}Dy_{1.62}Fe_{bal}B_{0.98}Co_{0.83}M_{0.59} (at mass fraction wt.%, M=Nb, Al, Cu, Zr, Ga) was treated with a specific grain boundary diffusion source at diffusion temperature to obtain a magnet material which has significantly increased coercivity and basically unchanged remanence. The diffusion method leads to a significant increase in neodymium rich phases and a more continuous and clear distribution. At the same time, a (Nd, Tb) ₂Fe₁₄B core-shell structure was formed to wrap the grains, which enhanced the demagnetization coupling between adjacent grains, thus improving the coercivity of the magnet. Specifically, the coercivity increased from 17.37 kOe to 20.04 kOe by an increase of 15.4%. At the same time, the temperature coefficient for coercivity and the temperature coefficient for remanence are significantly reduced. In the temperature range of 20-200 ° C, the absolute value of the temperature coefficient for coercivity was reduced from 0.454%/ °C to 0.442%/ °C, and the temperature coefficient for remanence was reduced from 0.124%/ °C to 0.12%/ °C. However, the magnetic material described in this literature still has the following defects: the increase of coercivity by diffusion is only 2.67kOe, which is relatively limited.

In the traditional preparation of a neodymium-iron-boron magnet, the addition of a small amount of Cu has a greater role in improving coercivity. For the diffused products, when the addition of Cu in the diffusion matrix is more than 0.5wt%, the function of improving coercivity of the product by the grain boundary diffusion is significantly reduced, and at the same time the remanence is reduced. Using a general formula design, Cu in the diffusion matrix is directly designed to be more than 0.5wt%, and then Tb diffusion is used to achieve high Cu content to prepare the high-performance 54SH brand product. In fact, when the amount of Cu added is more than 0.5wt%, the magnetic properties of the product after Tb diffusion are difficult to meet the requirements of the 54SH brand product.

At present, there is still a lack of a preparation process that can make full use of heavy rare earth elements to increase the coercivity.

### SUMMARY OF THE INVENTION

In order to solve the defect in the prior art that the function of improving the coercivity by adding a heavy rare earth element in the grain boundary diffusion process is relatively low, the invention mainly provides a grain boundary diffusion material, a neodymium-iron-boron magnet, a preparation method and use thereof. On the premise of adding the same amount of a heavy rare earth element, the neodymium-iron-boron magnet made from the grain boundary diffusion material for the neodymium-iron-boron magnet in the present invention can have a more significantly improved coercivity while maintaining the remanence basically unchanged.

The invention solves the above-mentioned technical problem mainly through the following technical solutions.

The invention provides a grain boundary diffusion material for a neodymium-iron-boron magnet, comprising a diffusion matrix and a diffusion source, wherein:
the diffusion source is a raw material to be diffused added during grain boundary diffusion treatment;
the diffusion matrix comprises the following components of:
   29-30 wt% of LR, wherein LR is a light rare earth element;
   0.15-0.5 wt% of Cu;
   0.99-1.05 wt% of B;
   67-70 wt% of Fe,
   wherein wt% is a mass percentage of respective component in the total
   mass of the neodymium-iron-boron magnet;
the diffusion source comprises Cu and Tb; and
a percentage of the mass of Cu in the neodymium-iron-boron magnet to the total mass of the neodymium-iron-boron magnet is more than 0.5 wt%.

In the invention, those skilled in the art know that the diffusion matrix generally refers to a magnetic material which can be directly subjected to grain boundary diffusion treatment, and the diffusion matrix can generally be a sintered body.

In the invention, in the diffusion matrix, the content of LR is preferably 29.4-30wt%, such as 29.42wt%, 29.5wt%, 29.62wt%, 29.65wt%, 29.6wt%, 29.68wt%, 29.7wt% or 29.73wt%, wherein wt% is the mass percentage of LR in the total mass of the neodymium-iron-boron magnet.

In the invention, the LR is commonly used in the prior art, which generally comprises one or more of Nd, Pr and a PrNd alloy, preferably is Nd, "Nd and Pr" or a PrNd alloy.

When the LR is Nd, the content of Nd is preferably 29.4-29.8wt%, such as 29.42wt%, 29.5wt%, 29.6wt%, 29.68wt%, 29.7wt% or 29.73wt%, wherein wt% is the mass percentage of Nd in the total mass of the neodymium-iron-boron magnet. The remanence of the neodymium-iron-boron magnet material wherein LR is Nd is higher than the remanence of the neodymium-iron-boron magnet materials wherein LR is "Nd and Pr" or the PrNd alloy.

When the LR is Nd and Pr, the content of Nd is preferably 21-23wt%, such as 22.28wt%; the content of Pr is preferably 6-8wt%, such as 7.43wt%; wherein wt% is the mass percentage of respective Nd or Pr in the total mass of the neodymium-iron-boron magnet.

When the LR is the PrNd alloy, the content of the PrNd alloy is preferably 29-30wt%, wherein wt% is the mass percentage of the PrNd alloy in the total mass of the neodymium-iron-boron magnet; and in the PrNd alloy, the mass ratio of Nd to Pr is 3:1.

In the invention, in the diffusion matrix, the content of Cu is preferably 0.15-0.35wt%, such as 0.16wt%, 0.24wt%, 0.25wt%, or 0.34wt%, wherein wt% is the mass percentage of Cu in the total mass of the neodymium-iron-boron magnet.

In the invention, the content of B is preferably 0.99-1.03wt%, such as 0.99wt%, 1wt%, or 1.01wt%, wherein wt% is the mass percentage of B in the total mass of the neodymium-iron-boron magnet.

In the invention, the diffusion matrix can further comprise a commonly added element in this field, such as one or more of Al, Co, Ti and Tb.

Wherein, when the diffusion matrix comprises Al, the content of Al is 0.2-0.4wt%, such as 0.3wt%, wherein wt% is the mass percentage of Al in the total mass of the neodymium-iron-boron magnet.

Wherein, when the diffusion matrix comprises Co, the content of Co is 0.5-1.5wt%, such as 1wt%, wherein wt% is the mass percentage of Co in the total mass of the neodymium-iron-boron magnet.

Wherein, when the diffusion matrix comprises Ti, the content of Ti is 0.1-0.2wt%, such as 0.15wt%; wherein wt% is the mass percentage of Ti in the total mass of the neodymium-iron-boron magnet.

Wherein, when the diffusion matrix comprises Tb, the content of Tb is preferably 1wt% or less, such as 0.8wt%, wherein wt% is the mass percentage of Tb in the total mass of the neodymium-iron-boron magnet.

In the invention, the inventor further found that when the diffusion matrix does not contain Al and Co, the coercivity of the neodymium-iron-boron magnet obtained by the grain boundary diffusion treatment can be improved more significantly.

Those skilled in the prior art know that the diffusion matrix does not contain Al, which generally means that no additional Al is added in the preparation of the diffusion matrix, however, it is inevitable to introduce less than 1wt%, such as 0.06wt% or 0.07wt% of Al in the preparation of the diffusion matrix, wherein wt% is the mass percentage of Al in the total mass of the neodymium-iron-boron magnet.

In the invention, in the diffusion matrix, the content of Fe is preferably 67-69wt%, such as 66.87wt%, 67.12wt%, 67.57wt%, 67.6wt%, 67.69wt%, 67.76wt%, 67.9wt%, 67.91wt%, or 68.03wt%, wherein wt% is the mass percentage of Fe in the total mass of the neodymium-iron-boron magnet.

In the invention, the content of the Tb in the diffusion source is traditional in the prior art, the content of Tb is preferably 0.1-1.5wt%, such as 0.65wt%, 0.66wt%, 0.7wt%, 0.81wt%, 0.85wt%, 0.86wt%, 0.88wt%, or 1wt%, wherein wt% is a ratio of the content of Tb to the total mass of the neodymium-iron-boron magnet.

In the invention, the content of the Cu in the neodymium-iron-boron magnet is preferably 0.51-0.65wt%, such as 0.51wt%, 0.52wt%, 0.55wt%, 0.61wt%, 0.62wt%, 0.63wt%, or 0.65wt%, wherein wt% is a ratio of the content of Cu to the total mass of the neodymium-iron-boron magnet.

In the invention, the diffusion matrix is prepared by a traditional preparation method in the prior art, which generally comprises the steps of subjecting a raw mixture of the diffusion matrix to smelting, pulverization, shaping, and sintering in turn.

Wherein, the temperature for the smelting is preferably 1400-1550°C, such as 1480°C, 1500°C or 1520°C. Those skilled in the prior art know that, in the practice, there is an error of plus or minus 20°C in the smelting temperature.

Wherein, the thickness of the alloy sheet obtained after smelting is 0.25-0.5mm, for example, 0.3mm. Those skilled in the prior art know that, in the practice, there is an error of plus or minus 0.5mm in the thickness of the alloy sheet.

Wherein, the pulverization generally comprises hydrogen decrepitation and jet mill pulverization in turn.

The particle size of the powder obtained after pulverization is, for example, 3-5µm.

Wherein, the shaping is a magnetic field shaping. The magnetic field shaping is carried out at a magnetic field strength of such as 1.6T or more.

Wherein, the temperature for the sintering is 1000-1100°C.

Wherein, the time for the sintering is for example 4-6 hours.

In a specific example of the invention, the diffusion matrix comprises the following components of: 29.6wt% of Nd, 0.24wt% of Cu, 0.15wt% of Ti, 1wt% of B, 0.06wt% of Al, and 67.69wt% of Fe, wherein wt% is a mass percentage of respective component in the total mass of the neodymium-iron-boron magnet; the diffusion source is 0.88wt% of Tb and 0.38wt% of Cu.

In a specific example of the invention, the diffusion matrix comprises the following components of: 29.68wt% of Nd, 0.16wt% of Cu, 0.15wt% of Ti, 1wt% of B, 0.06wt% of Al, and 67.6wt% of Fe, wherein wt% is a mass percentage of respective component in the total mass of the neodymium-iron-boron magnet; the diffusion source is 0.86wt% of Tb and 0.49wt% of Cu.

In a specific example of the invention, the diffusion matrix comprises the following components of: 29.73wt% of Nd, 0.34wt% of Cu, 0.15wt% of Ti, 1wt% of B, 0.07wt% of Al, and 67.57wt% of Fe, wherein wt% is a mass percentage of respective component in the total mass of the neodymium-iron-boron magnet; the diffusion source is 0.85wt% of Tb and 0.29wt% of Cu.

In a specific example of the invention, the diffusion matrix comprises the following components of: 29.7wt% of Nd, 0.5wt% of Cu, 0.15wt% of Ti, 1wt% of B, 0.06wt% of Al, and 67.76wt% of Fe, wherein wt% is a mass percentage of respective component in the total mass of the neodymium-iron-boron magnet; the diffusion source is 0.81wt% of Tb and 0.02wt% of Cu.

In a specific example of the invention, the diffusion matrix comprises the following components of: 29.6wt% of Nd, 0.25wt% of Cu, 0.15wt% of Ti, 1wt% of B, 0.06wt% of Al, and 68.03wt% of Fe, wherein wt% is a mass percentage of respective component in the total mass of the neodymium-iron-boron magnet; the diffusion source is 0.65wt% of Tb and 0.26wt% of Cu.

In a specific example of the invention, the diffusion matrix comprises the following components of: 29.5wt% of Nd, 0.8wt% of Tb, 0.25wt% of Cu, 0.15wt% of Ti, 1wt% of B, 0.06wt% of Al, and 67.12wt% of Fe, wherein wt% is a mass percentage of respective component in the total mass of the neodymium-iron-boron magnet; the diffusion source is 0.85wt% of Tb and 0.27wt% of Cu.

In a specific example of the invention, the diffusion matrix comprises the following components of: 29.42wt% of Nd, 0.25wt% of Cu, 0.15wt% of Ti, 1.01wt% of B, 0.3wt% of Al, and 66.87wt% of Fe, wherein wt% is a mass percentage of respective component in the total mass of the neodymium-iron-boron magnet; the diffusion source is 0.7wt% of Tb and 0.3wt% of Cu.

In a specific example of the invention, the diffusion matrix comprises the following components of: 22.28wt% of Nd, 0.25wt% of Cu, 0.15wt% of Ti, 0.99wt% of B, 0.06wt% of Al, and 67.91wt% of Fe, wherein wt% is a mass percentage of respective component in the total mass of the neodymium-iron-boron magnet; the diffusion source is 0.65wt% of Tb and 0.28wt% of Cu.

In a specific example of the invention, the diffusion matrix comprises the following components of: 29.7wt% of PrNd, 0.25wt% of Cu, 0.15wt% of Ti, 1wt% of B, 0.06wt% of Al, and 67.9wt% of Fe, wherein wt% is a mass percentage of respective component in the total mass of the neodymium-iron-boron magnet; the diffusion source is 0.66wt% of Tb and 0.28wt% of Cu.

The invention further provides a preparation method of a neodymium-iron-boron magnet, comprising a step of subjecting the diffusion matrix to grain boundary diffusion treatment by using the diffusion source.

In the invention, the grain boundary diffusion treatment is carried out according to a traditional manner in the prior art, generally, a diffusion source is formed on the surface of the diffusion matrix before thermal treatment.

In the invention, during the grain boundary diffusion treatment, the temperature for thermal treatment is preferably 850-950°C, and more preferably is 910°C-930°C , such as 920°C.

In the invention, the time for thermal treatment can be traditional in the prior art, which is preferably 10-40h, such as 30h.

In the invention, the formation method of the diffusion source is preferably magnetron sputtering, which forms a diffusion film layer on the surface of the diffusion matrix, for example, form a Tb film layer or form a Cu film layer at first. Those skilled in this field know that using magnetron sputtering is simpler in process and less difficult to prepare a diffusion source compared to using a TbCu alloy powder.

The invention further provides a neodymium-iron-boron magnet prepared by the preparation method of the neodymium-iron-boron magnet mentioned above.

The invention further provides a neodymium-iron-boron magnet, which comprises the following components of:
29-30.0 wt% of LR, wherein LR is a light rare earth element;
>0.5 wt% of Cu;
0.99-1.05 wt% of B;
67.0-70.0 wt% of Fe,
wherein wt% is a mass percentage of respective component in the total mass of the neodymium-iron-boron magnet;
the neodymium-iron-boron magnet further comprises Tb;
a grain boundary phase of the neodymium-iron-boron magnet comprises a Cu-rich phase having a width of 1-2.6 µm.

In the invention, the grain boundary phase can be a commonly understood meaning in this field, generally referring to the region formed by the two particle grain boundary phase and the intergranular triangular region. The two particle grain boundary phase is generally a grain boundary phase between two main phase particles.

In the invention, those skilled in the prior art know that the Cu-rich phase generally refers to the phase structure enriched with Cu that can be intuitively observed through the EPMA analysis. The content of Cu in the Cu-rich phase is more than 15 wt% of the total mass of all elements in the region.

In the invention, the width of the Cu-rich phase generally refers to the average value of the short edge size of the Cu-rich region observed by EPMA. The Cu-rich phase in the present invention is generally in an irregular strip shape, that is, the short edge size refers to the average value of the width of the irregular long strip shape.

In the invention, the width of the Cu-rich phase is preferably 1-2µm, such as 1.2µm, 1.5µm, 1.6µm, 1.7µm or 1.8µm.

In the invention, the content of LR is preferably 29-29.5wt%, such as 29.05wt%, 29.12wt%, 29.20wt%, 29.21wt%, 29.27wt%, 29.30wt%, 29.33wt%, 29.34wt%, or 29.35wt%, wherein wt% is the mass percentage of LR in the total mass of the neodymium-iron-boron magnet.

In the invention, the LR can be traditional in this field, and generally comprises one or more of Nd, Pr and a PrNd alloy, preferably, Nd, "Nd and Pr" or a PrNd alloy.

When the LR is Nd, the content of Nd is preferably 29-29.5wt%, such as 29.05wt%, 29.12wt%, 29.20wt%, 29.21wt%, 29.27wt% 29.30wt%, or 29.34wt%, wherein wt% is the mass percentage of Nd in the total mass of the neodymium-iron-boron magnet.

When the LR is Nd and Pr, the content of Nd is preferably 21-23wt%, such as 22wt%; the content of Pr is preferably 6-8wt%, such as 7.35wt%; wherein wt% is the mass percentage of respective Nd or Pr in the total mass of the neodymium-iron-boron magnet.

When the LR is the PrNd alloy, the content of the PrNd alloy is preferably 29-30wt%, such as 29.33wt%, wherein wt% is the mass percentage of the PrNd alloy in the total mass of the neodymium-iron-boron magnet.

In the invention, the content of Cu is preferably 0.51-0.65wt%, such as 0.51wt%, 0.52wt%, 0.53wt%, 0.55wt%, 0.61wt%, 0.62wt%, 0.63wt%, or 0.65wt%, wherein wt% is the mass percentage of Cu in the total mass of the neodymium-iron-boron magnet.

In the invention, the content of B is preferably 0.99-1.03wt%, such as 0.99wt%, 1wt%, or 1.01wt%, wherein wt% is the mass percentage of B in the total mass of the neodymium-iron-boron magnet.

In the invention, the content of Fe is preferably 67.0-69wt%, such as 67.33wt%, 67.88wt%, 67.94wt%, 68.06wt%, 68.04wt%, 68.26wt%, 68.27wt%, 67.48wt%, or 68.52wt%, wherein wt% is the mass percentage of Fe in the total mass of the neodymium-iron-boron magnet.

In the invention, the content of Tb is preferably 0.1-2wt%, such as 0.65wt%, 0.66wt%, 0.7wt%, 0.81wt%, 0.85wt%, 0.86wt%, 0.88wt%, or 1.65wt%, wherein wt% is the mass percentage of Tb in the total mass of the neodymium-iron-boron magnet.

In the invention, the neodymium-iron-boron magnet further comprises other common elements in this field, such as one or more of Al, Co, and Ti.

Wherein, when the neodymium-iron-boron magnet comprises Al, the content of Al is preferably 0.2-0.4wt%, such as 0.3wt%, wherein wt% is the mass percentage of Al in the total mass of the neodymium-iron-boron magnet.

Wherein, when the neodymium-iron-boron magnet comprises Co, the content of Co is 0.5-1.5wt%, such as 1wt%, wherein wt% is the mass percentage of Co in the total mass of the neodymium-iron-boron magnet.

Wherein, when the neodymium-iron-boron magnet comprises Ti, the content of Ti is 0.1-0.2wt%, such as 0.15wt%; wherein wt% is the mass percentage of Ti in the total mass of the neodymium-iron-boron magnet.

In the invention, the neodymium-iron-boron magnet preferably does not comprise Al and Co. Wherein, as mentioned above, said "does not comprise Al" generally means that the content of Al is 0.1wt% or less, such as 0.06wt%, or 0.07wt%, wherein wt% is the mass percentage of Al in the total mass of the neodymium-iron-boron magnet.

In a specific example of the invention, the neodymium-iron-boron magnet comprises the following components of: 29.34wt% of Nd, 0.88wt% of Tb, 0.62wt% of Cu, 0.15wt% of Ti, 1wt% of B, 0.07wt% of Al, and 67.94wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.2µm.

In a specific example of the invention, the neodymium-iron-boron magnet comprises the following components of: 29.21wt% of Nd, 0.86wt% of Tb, 0.65wt% of Cu, 0.15wt% of Ti, 1wt% of B, 0.07wt% of Al, and 68.06wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1µm.

In a specific example of the invention, the neodymium-iron-boron magnet comprises the following components of: 29.27wt% of Nd, 0.85wt% of Tb, 0.63wt% of Cu, 0.15wt% of Ti, 0.99wt% of B, 0.07wt% of Al, and 68.04wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.8µm.

In a specific example of the invention, the neodymium-iron-boron magnet comprises the following components of: 29.2wt% of Nd, 0.81wt% of Tb, 0.52wt% of Cu, 0.15wt% of Ti, 1wt% of B, 0.06wt% of Al, and 68.26wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 2.5µm.

In a specific example of the invention, the neodymium-iron-boron magnet comprises the following components of: 29.12wt% of Nd, 0.65wt% of Tb, 0.51wt% of Cu, 0.15wt% of Ti, 0.99wt% of B, 0.06wt% of Al, and 68.52wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.5µm.

In a specific example of the invention, the neodymium-iron-boron magnet comprises the following components of: 29.3wt% of Nd, 1.65wt% of Tb, 0.52wt% of Cu, 0.15wt% of Ti, 0.99wt% of B, 0.06wt% of Al, and 67.33wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.5µm.

In a specific example of the invention, the neodymium-iron-boron magnet comprises the following components of: 29.05wt% of Nd, 0.7wt% of Tb, 0.55wt% of Cu, 0.15wt% of Ti, 1wt% of Co, 1.01wt% of B, 0.3wt% of Al, and 67.24wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.7µm.

In a specific example of the invention, the neodymium-iron-boron magnet comprises the following components of: 22wt% of Nd, 7.35wt% Pr, 0.65wt% of Tb, 0.53wt% of Cu, 0.15wt% of Ti, 0.99wt% of B, 0.06wt% of Al, and 68.27wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.6µm.

In a specific example of the invention, the neodymium-iron-boron magnet comprises the following components of: 29.33wt% of PrNd, 0.66wt% of Tb, 0.53wt% of Cu, 0.15wt% of Ti, 1wt% of B, 0.06wt% of Al, and 68.27wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.5µm.

The invention further provides use of the neodymium-iron-boron magnet as a material for preparing a permanent magnet motor.

Wherein, the permanent magnet motor is for example, an air conditioning compressor, or a general servo motor.

On the basis of conforming to common knowledge in the field, the above-mentioned preferred conditions can be combined arbitrarily to obtain the preferred examples of the present invention.

The reagents and raw materials used in the present invention are all commercially available.

On the premise of adding the same amount of a heavy rare earth element, the neodymium-iron-boron magnet made from the grain boundary diffusion material for the neodymium-iron-boron magnet in the present invention can have a more significantly improved coercivity while maintaining the remanence basically unchanged, which is a neodymium-iron-boron magnet having high performance (such as 54SH band).

### BRIEF DESCRIPTION OF THE DRAWINGS

Fig. 1 shows the EPMA analysis of the neodymium-iron-boron magnet prepared in Example 4.
Fig. 2 shows the EPMA analysis of the neodymium-iron-boron magnet prepared in Example 5.
Fig. 3 shows the EPMA analysis of the neodymium-iron-boron magnet prepared in Example 7.

### DETAILED DESCRIPTION OF THE INVENTION

The present invention is further illustrated below by means of examples, but the present invention is not limited to the scope of the examples. The experimental methods not indicating specific conditions in the following examples were carried out according to the conventional methods and conditions, or were selected according to the product instructions.

### Example 1

### (1) Preparation for diffusion matrix

A raw material comprising respective components according to the formula in Table 1 were mixed and then smelted in an induction furnace at a temperature of 1500±20°C. The obtained mixture was quickly quenched and strip-shaped to produce a sheet shaped alloy with a thickness of 0.3 ± 0.05mm. The sheet shaped alloy was subjected to hydrogen decrepitation and jet mill pulverization to produce a 3-5 µm powder. The powder was shaped under magnetic field conditions with a magnetic field strength of 1.6T or more and then sintered at 1000-1100°C for 4-6 hours to produce a block shaped neodymium-iron-boron permanent magnet, which was then cut into sheet-shaped matrixes for future grain boundary diffusion.

### (2) Grain boundary diffusion treatment

A neodymium-iron-boron magnet was produced by grain boundary diffusion treatment by magnetron sputtering coating followed by thermal treatment, wherein the weight of the film layer increased by magnetron sputtering was 1.26 wt% (the weight corresponds to the total mass of Tb and Cu in the diffusion source), the temperature for thermal treatment in grain boundary diffusion treatment was 920 °C and the time for the thermal treatment was 30 hours.

The formulas for the diffusion matrixes and the diffusion sources for grain boundary diffusion treatment in Examples 1-9 and Comparative Example 1 are shown in Table 1. The preparation steps and process parameters for Examples 2-9 and Comparative Example 1 are the same as those of Example 1.

**Table 1**

| | Diffusion Matrix wt% | | | | | | | | | | | | Diffusion source wt% | |
|---|---|---|---|---|---|---|---|---|---|---|---|---|---|---|
| | PrNd | Nd | Pr | Tb | Dy | Cu | Nb | Ti | Co | B | Al | Fe | Tb | Cu |
| Comparative Example 1 | / | 29.65 | / | / | / | 0.61 | / | 0.15 | / | 1.00 | 0.07 | 67.52 | 1.00 | 0 |
| Example 1 | / | 29.60 | / | / | / | 0.24 | / | 0.15 | / | 1.00 | 0.06 | 67.69 | 0.88 | 0.38 |
| Example 2 | / | 29.68 | / | / | / | 0.16 | / | 0.15 | / | 1.00 | 0.06 | 67.6 | 0.86 | 0.49 |
| Example 3 | / | 29.73 | / | / | / | 0.34 | / | 0.15 | / | 1.00 | 0.07 | 67.57 | 0.85 | 0.29 |
| Example 4 | / | 29.70 | / | / | / | 0.50 | / | 0.15 | / | 1.00 | 0.06 | 67.76 | 0.81 | 0.02 |
| Example 5 | / | 29.60 | / | / | / | 0.25 | / | 0.15 | / | 1.00 | 0.06 | 68.03 | 0.65 | 0.26 |
| Example 6 | / | 29.50 | / | 0.8 | / | 0.25 | / | 0.15 | / | 1.00 | 0.06 | 67.12 | 0.85 | 0.27 |
| Example 7 | / | 29.42 | / | / | / | 0.25 | / | 0.15 | 1.0 | 1.01 | 0.30 | 66.87 | 0.70 | 0.30 |
| Example 8 | / | 22.28 | 7.43 | / | / | 0.25 | | 0.15 | / | 0.99 | 0.06 | 67.91 | 0.65 | 0.28 |
| Example 9 | 29.7 | / | / | / | / | 0.25 | | 0.15 | / | 1.00 | 0.06 | 67.90 | 0.66 | 0.28 |

Note: The contents of the components of the diffusion matrixes prepared in Table 1 wwere measured using a high-frequency inductively coupled plasma optical emission spectrometer (ICP-OES). The PrNd alloy in Table 1 refers to a PrNd alloy wherein the mass ratio of Nd to Pr is 3:1.

Wherein, "/" indicates that the element is not included. In the diffusion matrixes, the contents of respective components are the mass percentages of the respective components in the total mass of the neodymium-iron-boron magnet. The masses of the diffusion matrixes do not contain the impurities unavoidable introduced during the preparation process of the diffusion matrixes, such as C, O etc. However, 0.08wt% or less of Al in the diffusion matrixes was introduced from a non-Al raw material. In the diffusion sources, the mass contents of Tb and Cu, respectively referr to the mass percentage of Tb or Cu to the total mass of neodymium-iron-boron magnet.

### Effect Example 1

### 1. Determination of the components of the neodymium-iron-boron magnet prepared in Examples 1-9 and Comparative Example 1:

The determination was performed by using a high-frequency inductively coupled plasma optical emission spectrometer (ICP-OES). The testing results are shown in Table 2 below.

**Table 2 (Unit: wt%)**

| | **PrNd** | **Nd** | **Pr** | **Tb** | **Dy** | **Cu** | **Nb** | **Ti** | **Co** | **B** | **Al** | **Fe** |
|---|---|---|---|---|---|---|---|---|---|---|---|---|
| **Comparative Example 1** | / | 29.28 | / | 1.00 | / | 0.61 | / | 0.15 | / | 1.01 | 0.07 | 67.88 |
| **Example 1** | / | 29.34 | / | 0.88 | / | 0.62 | / | 0.15 | / | 1.00 | 0.07 | 67.94 |
| **Example 2** | / | 29.21 | / | 0.86 | / | 0.65 | / | 0.15 | / | 1.00 | 0.07 | 68.06 |
| **Example 3** | / | 29.27 | / | 0.85 | / | 0.63 | / | 0.15 | / | 0.99 | 0.07 | 68.04 |
| **Example 4** | / | 29.20 | / | 0.81 | / | 0.52 | / | 0.15 | / | 1.00 | 0.06 | 68.26 |
| **Example 5** | / | 29.12 | / | 0.65 | / | 0.51 | / | 0.15 | / | 0.99 | 0.06 | 68.52 |
| **Example 6** | / | 29.30 | / | 1.65 | / | 0.52 | / | 0.15 | / | 0.99 | 0.06 | 67.33 |
| **Example 7** | / | 29.05 | / | 0.70 | / | 0.55 | / | 0.15 | 1.00 | 1.01 | 0.3 | 67.24 |
| **Example 8** | / | 22.00 | 7.35 | 0.65 | / | 0.53 | / | 0.15 | / | 0.99 | 0.06 | 68.27 |
| **Example 9** | 29.33 | / | / | 0.66 | / | 0.53 | / | 0.15 | / | 1.00 | 0.06 | 68.27 |

| | | | | | | | | | | | | |
|---|---|---|---|---|---|---|---|---|---|---|---|---|
| Note: The contents of the respective components refer to the percentages of the masses of respective components in the total mass of the neodymium-iron-boron magnet. It has been detected that the Nd content in the neodymium-iron-boron magnet will decrease, which may be because the rare earth in the diffusion matrix will volatilize in a small amount because the grain boundary diffusion treatment is a heat treatment process. | | | | | | | | | | | | |

### 2. Testing for Magnetic Performance

At room temperature of 20°C, the neodymium-iron-boron magnets were tested by using a PFM pulsed BH demagnetization curve testing equipment to obtain the data of magnetic performance.

The testing results for magnetic performance of 5 products in the same batch of neodymium-iron-boron magnets in Example 1 at 20°C are shown in Table 3 below.

**Table 3**

| | Br(kGs) | Hcj(kOe) | HcB (kOe) | (BH)max(MGOe) | HK (kOe) |
|---|---|---|---|---|---|
| 1 | 14.43 | 20.48 | 13.84 | 49.96 | 17.48 |
| 2 | 14.41 | 20.20 | 13.82 | 49.83 | 17.40 |
| 3 | 14.46 | 20.38 | 13.92 | 50.25 | 17.69 |
| 4 | 14.45 | 20.45 | 13.88 | 50.08 | 17.79 |
| 5 | 14.46 | 20.16 | 13.91 | 50.28 | 17.70 |

From Table 3, it can be seen that the magnetic properties of the same batch of products in the present invention are uniform and have good stability.

The average magnetic properties of Example 1 are shown in Table 4 below. Other examples used the same testing method, and the average magnetic properties obtained are shown in Table 4 below.

**Table 4**

| Example | Formula/Magnetic Properties | Br (kGs) | Hcj (kOe) | HcB (kOe) | (BH)max (MGOe) |
|---|---|---|---|---|---|
| Comparative Example 1 | Diffusion Matrix | 14.59 | 10.5 | 10.00 | 51.02 |
| | R-T-B magnetic | 14.47 | 18.04 | 13.85 | 50.67 |
| Example 1 | Diffusion Matrix | 14.63 | 10.02 | 9.62 | 51.13 |
| | R-T-B magnetic | 14.44 | 20.33 | 13.87 | 50.08 |
| Example 2 | Diffusion Matrix | 14.7 | 9.80 | 9.35 | 52.50 |
| | R-T-B magnetic | 14.50 | 20.22 | 13.97 | 51.06 |
| Example 3 | Diffusion Matrix | 14.60 | 10.10 | 9.56 | 51.89 |
| | R-T-B magnetic | 14.43 | 18.88 | 13.83 | 50.10 |
| Example 4 | Diffusion Matrix | 14.60 | 10.07 | 9.52 | 51.90 |
| | R-T-B magnetic | 14.42 | 18.45 | 13.90 | 50.67 |
| Example 5 | Diffusion Matrix | 14.68 | 10.00 | 9.62 | 52.01 |
| | R-T-B magnetic | 14.46 | 20.52 | 13.85 | 50.17 |
| Example 6 | Diffusion Matrix | 14.16 | 13.08 | 12.62 | 48.37 |
| | R-T-B magnetic | 14.06 | 25.40 | 13.55 | 47.89 |
| Example 7 | Diffusion Matrix | 14.38 | 11.01 | 10.6 | 49.76 |
| | R-T-B magnetic | 14.28 | 19.72 | 13.67 | 48.15 |
| Example 8 | Diffusion Matrix | 14.25 | 12.50 | 12.06 | 48.98 |
| | R-T-B magnetic | 14.18 | 22.80 | 13.45 | 48.55 |
| Example 9 | Diffusion Matrix | 14.24 | 12.55 | 12.08 | 49.05 |
| | R-T-B magnetic | 14.16 | 23.01 | 13.47 | 48.43 |

| | | | | | |
|---|---|---|---|---|---|
| Note: R-T-B magnetic refers to the neodymium-iron-boron magnet. | | | | | |

It can be seen from the data in the above Tables that, according to the diffusion method of the invention, a specific content of Cu was added to the diffusion matrix, and specific contents of Tb and Cu were added during the grain boundary diffusion treatment in combination with the specific diffusion matrix of the invention. Compared with the scheme of only adding Tb during the grain boundary diffusion, the improvement of coercivity was more significant. In the process of research and development, the inventor added all amount of Cu during the grain boundary diffusion, but the improvement degree of coercivity was equivalent to that of Comparative Example 1, and did not reach the level of the invention.

Furthermore, based on the above formulas, the present invention has discovered a neodymium-iron-boron magnet with better magnetic performance. For example, by comparing Examples 1-3, it can be seen that, when the content of Cu in the diffusion matrix was 0.16wt% or 0.24wt%, compared with the content of Cu at 0.34wt%, the coercivity can be increased by more than 10 kOe. For example, compared with other examples, additional Al and Co were added in Example 7, however, the improvement value of coercivity in Exmple 7 could only reach 8.72kOe.

### 3. Characterization of Microstructures

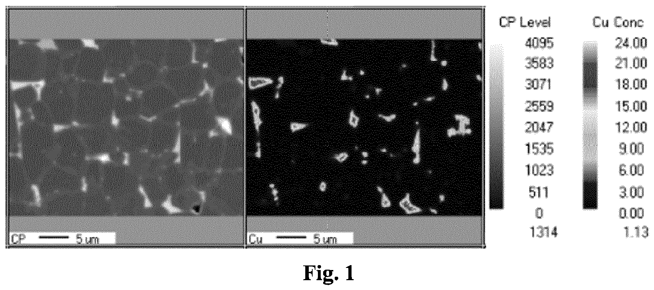

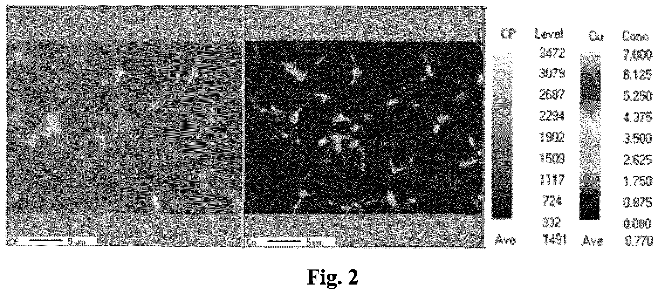

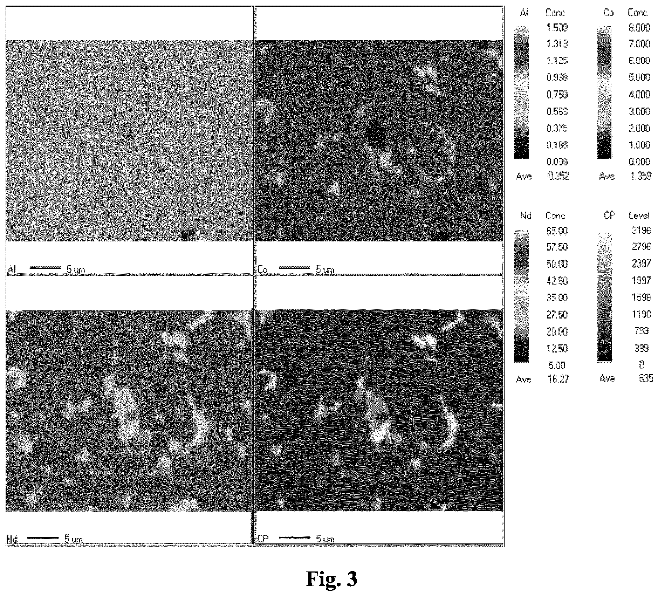

The neodymium-iron-boron magnets of Examples 1-9 and Comparative Example 1 were made into samples with metallographic surfaces, and an electronic probe was used to interact with the samples with metallographic surfaces regarding electrons and patterns to generate secondary electrons and X-rays. The morphologies of the samples were observed by the secondary electron signal. By measuring the wavelength and intensity of the X-rays, the elements in the samples were qualitatively and quantitatively analyzed. Surface scanning of the electronic probe was used to calibrate and measure the short edge size of the Cu-rich phase at the grain boundary by using a ruler tool of the equipment, so as to measure the width of the Cu-rich phase. Fig. 1 shows the EPMA analysis of the neodymium-iron-boron magnet prepared in Example 4. Fig. 2 shows the EPMA analysis of the neodymium-iron-boron magnet prepared in Example 5. Fig. 3 shows the EPMA analysis of the neodymium-iron-boron magnet prepared in Example 7, wherein Al is distributed in a diffuse manner, and a large amount of Co is distributed in the grain boundaries. The specific test results are shown in Table 5 below.

**Table 5**

| | Width of Cu-rich phase(µm) |
|---|---|
| Comparative Example 1 | 3.0 |
| Example 1 | 1.2 |
| Example 2 | 1.0 |
| Example 3 | 1.8 |
| Example 4 | 2.5 |
| Example 5 | 1.5 |
| Example 6 | 1.5 |
| Example 7 | 1.7 |
| Example 8 | 1.6 |
| Example 9 | 1.5 |

| | |
|---|---|
| Note: The width of the Cu-rich phase refers to the average value of the short edge size of the Cu-rich region observed by EPMA. For example, if the Cu-rich region is a long strip, the average value of the short edge size is the average value of the width of the long strip. | |

Combining Table 5 and Table 1, it can be seen that the width of Cu-rich phase at grain boundary is positively correlated with the content of Cu added to the matrix.

Through the above experimental comparison, it was found that, in Example 4, the Cu added is largely distributed at grain boundaries and a small amount thereof is distributed within the main phase grains. The Cu enrichment in grain boundary leads to form a coarser grain boundary and further reduces the proportion of the main phase and reduces the remanence. At the same time, due to the coarser grain boundary, the effect of demagnetization coupling by a heavy rare earth diffused into the grain boundary of the base materials is reduced, which reduces the effect of Tb diffused into the matrix, and finally results in a decrease of the improving effect for coercivity. In Example 5, although the total amount of Cu added is equal, a smaller amount of Cu is distributed in the grain boundary, which is more conducive to the continuity of the grain boundary and improves the coercivity.

## Claims

1. A grain boundary diffusion material for a neodymium-iron-boron magnet, **characterized by** comprising a diffusion matrix and a diffusion source, wherein:
the diffusion source is a raw material to be diffused added during grain boundary diffusion treatment;
the diffusion matrix comprises the following components of:
29-30 wt% of LR, wherein LR is a light rare earth element;
0.15-0.5 wt% of Cu;
0.99-1.05 wt% of B;
67-70 wt% of Fe,
wherein wt% is a mass percentage of respective component in the total mass of the neodymium-iron-boron magnet;
the diffusion source comprises Cu and Tb; and
a percentage of the mass of Cu in the neodymium-iron-boron magnet to the total mass of the neodymium-iron-boron magnet is more than 0.5 wt%.

2. The grain boundary diffusion material for a neodymium-iron-boron magnet according to claim 1, **characterized in that**:
the diffusion matrix is a sintered body; and/or
in the diffusion matrix, the content of LR is 29.4-30wt%, such as 29.42wt%, 29.5wt%, 29.6wt%, 29.68wt%, 29.7wt%, or 29.73wt%, wherein wt% is the mass percentage of LR in the total mass of the neodymium-iron-boron magnet; and/or
the LR comprises one or more of Nd, Pr and a PrNd alloy, such as Nd, "Nd and Pr" or a PrNd alloy;
when the LR is Nd, the content of Nd is preferably 29.4-29.8wt%, such as 29.42wt%, 29.5wt%, 29.6wt%, 29.68wt%, 29.7wt% or 29.73wt%, wherein wt% is the mass percentage of Nd in the total mass of the neodymium-iron-boron magnet;
when the LR is Nd and Pr, the content of Nd is preferably 21-23wt%, such as 22.28wt%; the content of Pr is preferably 6-8wt%, such as 7.43wt%, wherein wt% is the mass percentage of respective Nd or Pr in the total mass of the neodymium-iron-boron magnet;
when the LR is the PrNd alloy, the content of the PrNd alloy is preferably 29-30wt%, such as 29.7wt%, wherein wt% is the mass percentage of the PrNd alloy in the total mass of the neodymium-iron-boron magnet; in the PrNd alloy, the mass ratio of Nd to Pr is for example 3:1; and/or
in the diffusion matrix, the content of Cu is 0.15-0.35wt%, such as 0.16wt%, 0.24wt%, 0.25wt%, or 0.34wt%, wherein wt% is the mass percentage of Cu in the total mass of the neodymium-iron-boron magnet; and/or
in the diffusion matrix, the content of B is 0.99-1.03wt%, such as 0.99wt%, 1wt%, or 1.01wt%, wherein wt% is the mass percentage of B in the total mass of the neodymium-iron-boron magnet; and/or
in the diffusion matrix, the content of Fe is 67-69wt%, such as 66.87wt%, 67.12wt%, 67.57wt%, 67.6wt%, 67.69wt%, 67.76wt%, 67.9wt%, 67.91wt%, or 68.03wt%, wherein wt% is the mass percentage of Fe in the total mass of the neodymium-iron-boron magnet; and/or
in the diffusion source, the content of Tb is 0.1-1.5wt%, such as 0.65wt%, 0.66wt%, 0.7wt%, 0.81wt%, 0.85wt%, 0.86wt%, 0.88wt%, or 1wt%, wherein wt% is the mass percentage of Tb in the total mass of the neodymium-iron-boron magnet; and/or
the percentage of the mass of Cu in the neodymium-iron-boron magnet to the total mass of the neodymium-iron-boron magnet is 0.51-0.65wt%, such as 0.51wt%, 0.52wt%, 0.55wt%, 0.61wt%, 0.62wt%, 0.63wt%, or 0.65wt%; and/or
the diffusion matrix further comprises one or more of Al, Co, Ti and Tb;
when the diffusion matrix comprises Al, the content of Al is such as 0.2-0.4wt%, or 0.1 wt% or less, specifically such as 0.06wt%, 0.07wt%, or 0.3wt%, wherein wt% is the mass percentage of Al in the total mass of the neodymium-iron-boron magnet;
when the diffusion matrix comprises Co, the content of Co is such as 0.5-1.5wt%, specifically such as 1wt%, wherein wt% is the mass percentage of Co in the total mass of the neodymium-iron-boron magnet; or
the diffusion matrix does not comprise Co;
when the diffusion matrix comprises Ti, the content of Ti is preferably 0.1-0.2wt%, such as 0.15wt%; wherein wt% is the mass percentage of Ti in the total mass of the neodymium-iron-boron magnet;
when the diffusion matrix comprises Tb, the content of Tb is preferably 1wt% or less, such as 0.8wt%.

3. The grain boundary diffusion material for a neodymium-iron-boron magnet according to claim 2, **characterized in that**:
a preparation method of the diffusion matrix comprises subjecting a raw mixture for the diffusion matrix to smelting, pulverization, shaping, and sintering in turn, wherein
the temperature for the smelting is preferably 1400-1550°C, such as 1480°C, 1500°C or 1520°C;
wherein, the thickness of an alloy sheet obtained after the smelting is 0.25-0.5mm, for example, 0.3mm;
wherein, the pulverization preferably comprises hydrogen decrepitation and jet mill pulverization in turn; the particle size of the powder obtained after the pulverization is, for example, 3-5µm;
wherein, the shaping is for example a magnetic field shaping, wherein the magnetic field shaping is carried out at a magnetic field strength of such as 1.6T or more;
wherein the temperature for the sintering is for example 1000-1100°C;
wherein the time for the sintering is for example 4-6 hours.

4. The grain boundary diffusion material for a neodymium-iron-boron magnet according to claim 3, **characterized in that**:
the diffusion matrix comprises the following components of: 29.6wt% of Nd, 0.24wt% of Cu, 0.15wt% of Ti, 1wt% of B, 0.06wt% of Al, and 67.69wt% of Fe, wherein wt% is a mass percentage of respective component in the total mass of the neodymium-iron-boron magnet; the diffusion source is 0.88wt% of Tb and 0.38wt% of Cu; or
the diffusion matrix comprises the following components of: 29.68wt% of Nd, 0.16wt% of Cu, 0.15wt% of Ti, 1wt% of B, 0.06wt% of Al, and 67.6wt% of Fe, wherein wt% is a mass percentage of respective component in the total mass of the neodymium-iron-boron magnet; the diffusion source is 0.86wt% of Tb and 0.49wt% of Cu; or
the diffusion matrix comprises the following components of: 29.73wt% of Nd, 0.34wt% of Cu, 0.15wt% of Ti, 1wt% of B, 0.07wt% of Al, and 67.57wt% of Fe, wherein wt% is a mass percentage of respective component in the total mass of the neodymium-iron-boron magnet; the diffusion source is 0.85wt% of Tb and 0.29wt% of Cu; or
the diffusion matrix comprises the following components of: 29.7wt% of Nd, 0.5wt% of Cu, 0.15wt% of Ti, 1wt% of B, 0.06wt% of Al, and 67.76wt% of Fe, wherein wt% is a mass percentage of respective component in the total mass of the neodymium-iron-boron magnet; the diffusion source is 0.81wt% of Tb and 0.02wt% of Cu; or
the diffusion matrix comprises the following components of: 29.6wt% of Nd, 0.25wt% of Cu, 0.15wt% of Ti, 1wt% of B, 0.06wt% of Al, and 68.03wt% of Fe, wherein wt% is a mass percentage of respective component in the total mass of the neodymium-iron-boron magnet; the diffusion source is 0.65wt% of Tb and 0.26wt% of Cu; or
the diffusion matrix comprises the following components of: 29.5wt% of Nd, 0.8wt% of Tb, 0.25wt% of Cu, 0.15wt% of Ti, 1wt% of B, 0.06wt% of Al, and 67.12wt% of Fe, wherein wt% is a mass percentage of respective component in the total mass of the neodymium-iron-boron magnet; the diffusion source is 0.85wt% of Tb and 0.27wt% of Cu; or
the diffusion matrix comprises the following components of: 29.42wt% of Nd, 0.25wt% of Cu, 0.15wt% of Ti, 1.01wt% of B, 0.3wt% of Al, and 66.87wt% of Fe, wherein wt% is a mass percentage of respective component in the total mass of the neodymium-iron-boron magnet; the diffusion source is 0.7wt% of Tb and 0.3wt% of Cu; or
the diffusion matrix comprises the following components of: 22.28wt% of Nd, 0.25wt% of Cu, 0.15wt% of Ti, 0.99wt% of B, 0.06wt% of Al, and 67.91wt% of Fe, wherein wt% is a mass percentage of respective component in the total mass of the neodymium-iron-boron magnet; the diffusion source is 0.65wt% of Tb and 0.28wt% of Cu; or
the diffusion matrix comprises the following components of: 29.7wt% of PrNd, 0.25wt% of Cu, 0.15wt% of Ti, 1wt% of B, 0.06wt% of Al, and 67.9wt% of Fe, wherein wt% is a mass percentage of respective component in the total mass of the neodymium-iron-boron magnet; the diffusion source is 0.66wt% of Tb and 0.28wt% of Cu.

5. A preparation method of a neodymium-iron-boron magnet, **characterized by** comprising a step of subjecting the diffusion matrix according to any one of claims 1-4 to grain boundary diffusion treatment by using the diffusion source according to any one of claims 1-4, wherein
during the grain boundary diffusion treatment, the temperature for thermal treatment is preferably 850-950°C, and more preferably is 910-930°C , such as 920°C;
during the grain boundary diffusion treatment, the time for thermal treatment is preferably 10-40h, such as 30h;
the diffusion source is preferably formed by magnetron sputtering.

6. A neodymium-iron-boron magnet prepared by the preparation method of the neodymium-iron-boron magnet according to claim 5.

7. A neodymium-iron-boron magnet, **characterized by** comprising the following components of:
29-30.0 wt% of LR, wherein LR is a light rare earth element;
>0.5 wt% of Cu;
0.99-1.05 wt% of B;
67.0-70.0 wt% of Fe,
wherein wt% is a mass percentage of respective component in the total mass of the neodymium-iron-boron magnet;
the neodymium-iron-boron magnet further comprises Tb;
a grain boundary phase of the neodymium-iron-boron magnet comprises a Cu-rich phase having a width of 1-2.6 µm.

8. The neodymium-iron-boron magnet according to the claim 7, **characterized in that**:
the percentage of the mass of Cu in the Cu-rich phase to the total mass of all elements in the Cu-rich phase is 15wt% or more; and/or
the width of the Cu-rich phase is 1-2µm, such as 1.2µm, 1.5µm, 1.6µm, 1.7µm or 1.8µm; and/or
the content of LR is 29-29.5wt%, such as 29.05wt%, 29.12wt%, 29.20wt%, 29.21wt%, 29.27wt%, 29.30wt%, 29.33wt%, 29.34wt%, or 29.35wt%, wherein wt% is the mass percentage of LR in the total mass of the neodymium-iron-boron magnet; and/or
the LR comprises one or more of Nd, Pr and a PrNd alloy, such as Nd, "Nd and Pr" or a PrNd alloy;
when the LR is Nd, the content of Nd is preferably 29-29.5wt%, such as 29.05wt%, 29.12wt%, 29.20wt%, 29.21wt%, 29.27wt% 29.30wt%, or 29.34wt%, wherein wt% is the mass percentage of Nd in the total mass of the neodymium-iron-boron magnet;
when the LR is Nd and Pr, the content of Nd is preferably 21-23wt%, such as 22wt%; the content of Pr is preferably 6-8wt%, such as 7.35wt%; wherein wt% is the mass percentage of respective Nd or Pr in the total mass of the neodymium-iron-boron magnet;
when the LR is the PrNd alloy, the content of the PrNd alloy is preferably 29-30wt%, such as 29.33wt%, wherein wt% is the mass percentage of the PrNd alloy in the total mass of the neodymium-iron-boron magnet; and/or
the content of Cu is 0.51-0.65wt%, such as 0.51wt%, 0.52wt%, 0.53wt%, 0.55wt%, 0.61wt%, 0.62wt%, 0.63wt%, or 0.65wt%, wherein wt% is the mass percentage of Cu in the total mass of the neodymium-iron-boron magnet; and/or
the content of B is 0.99-1.03wt%, such as 0.99wt%, 1wt%, or 1.01wt%, wherein wt% is the mass percentage of B in the total mass of the neodymium-iron-boron magnet; and/or
the content of Fe is 67.0-69wt%, such as 67.33wt%, 67.88wt%, 67.94wt%, 68.06wt%, 68.04wt%, 68.26wt%, 68.27wt%, 67.48wt%, or 68.52wt%, wherein wt% is the mass percentage of Fe in the total mass of the neodymium-iron-boron magnet; and/or
the content of Tb is 0.1-2wt%, such as 0.65wt%, 0.66wt%, 0.7wt%, 0.81wt%, 0.85wt%, 0.86wt%, 0.88wt%, or 1.65wt%, wherein wt% is the mass percentage of Tb in the total mass of the neodymium-iron-boron magnet; and/or
the neodymium-iron-boron magnet further comprises one or more of Al, Co, and Ti;
when the neodymium-iron-boron magnet comprises Al, the content of Al is preferably 0.2-0.4wt%, or 0.1wt% or less, specifically such as 0.06wt%, 0.07wt%, or 0.3wt%, wherein wt% is the mass percentage of Al in the total mass of the neodymium-iron-boron magnet;
when the neodymium-iron-boron magnet comprises Co, the content of Co is 0.5-1.5wt%, such as 1wt%, wherein wt% is the mass percentage of Co in the total mass of the neodymium-iron-boron magnet; or
the neodymium-iron-boron magnet does not comprise Co;
when the neodymium-iron-boron magnet comprises Ti, the content of Ti is 0.1-0.2wt%, such as 0.15wt%, wherein wt% is the mass percentage of Ti in the total mass of the neodymium-iron-boron magnet.

9. The neodymium-iron-boron magnet according to claim 8, **characterized in that**:
the neodymium-iron-boron magnet comprises the following components of: 29.34wt% of Nd, 0.88wt% of Tb, 0.62wt% of Cu, 0.15wt% of Ti, 1wt% of B, 0.07wt% of Al, and 67.94wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.2µm; or
the neodymium-iron-boron magnet comprises the following components of: 29.21wt% of Nd, 0.86wt% of Tb, 0.65wt% of Cu, 0.15wt% of Ti, 1wt% of B, 0.07wt% of Al, and 68.06wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1µm; or
the neodymium-iron-boron magnet comprises the following components of: 29.27wt% of Nd, 0.85wt% of Tb, 0.63wt% of Cu, 0.15wt% of Ti, 0.99wt% of B, 0.07wt% of Al, and 68.04wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.8µm; or
the neodymium-iron-boron magnet comprises the following components of: 29.2wt% of Nd, 0.81wt% of Tb, 0.52wt% of Cu, 0.15wt% of Ti, 1wt% of B, 0.06wt% of Al, and 68.26wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 2.5µm; or
the neodymium-iron-boron magnet comprises the following components of: 29.12wt% of Nd, 0.65wt% of Tb, 0.51wt% of Cu, 0.15wt% of Ti, 0.99wt% of B, 0.06wt% of Al, and 68.52wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.5µm; or
the neodymium-iron-boron magnet comprises the following components of: 29.3wt% of Nd, 1.65wt% of Tb, 0.52wt% of Cu, 0.15wt% of Ti, 0.99wt% of B, 0.06wt% of Al, and 67.33wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.5µm; or
the neodymium-iron-boron magnet comprises the following components of: 29.05wt% of Nd, 0.7wt% of Tb, 0.55wt% of Cu, 0.15wt% of Ti, 1wt% of Co, 1.01wt% of B, 0.3wt% of Al, and 67.24wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.7µm; or
the neodymium-iron-boron magnet comprises the following components of: 22wt% of Nd, 7.35wt% Pr, 0.65wt% of Tb, 0.53wt% of Cu, 0.15wt% of Ti, 0.99wt% of B, 0.06wt% of Al, and 68.27wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.6µm; or
the neodymium-iron-boron magnet comprises the following components of: 29.33wt% of PrNd, 0.66wt% of Tb, 0.53wt% of Cu, 0.15wt% of Ti, 1wt% of B, 0.06wt% of Al, and 68.27wt% of Fe, wherein wt% is a mass percentage of respective component in the total mass of the neodymium-iron-boron magnet; the neodymium-iron-boron magnet comprises a Cu-rich phase in the grain boundary phase, and the width of the Cu-rich phase is 1.5µm.

10. Use of the neodymium-iron-boron magnet according to any one of claims 6-9 as a material for preparing a permanent magnet motor.
